(19) Europäisches Patentamt European Patent Office Office européen des brevets

(11) **EP 4 593 233 A1**

(12) **EUROPEAN PATENT APPLICATION**
published in accordance with Art. 153(4) EPC

(43) Date of publication:
**30.07.2025 Bulletin 2025/31**

(21) Application number: **23899497.4**

(22) Date of filing: **30.08.2023**

(51) International Patent Classification (IPC):
***H02J 7/00*** (2006.01)

(52) Cooperative Patent Classification (CPC):
**H02J 7/00**

(86) International application number:
**PCT/CN2023/115894**

(87) International publication number:
**WO 2024/119913 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.12.2022 CN 202211574426**

(71) Applicant: **GUANGDONG OPPO MOBILE TELECOMMUNICATIONS CORP., LTD.**
**Dongguan, Guangdong 523860 (CN)**

(72) Inventors:
• **ZENG, Dezhi**
  **Dongguan, Guangdong 523860 (CN)**
• **TIAN, Chen**
  **Dongguan, Guangdong 523860 (CN)**
• **CHEN, Shebiao**
  **Dongguan, Guangdong 523860 (CN)**

(74) Representative: **Novagraaf Technologies**
**Bâtiment O2**
**2, rue Sarah Bernhardt**
**CS90017**
**92665 Asnières-sur-Seine Cedex (FR)**

(54) **POWER SUPPLY SYSTEM AND CONTROL METHOD THEREFOR, AND ELECTRONIC DEVICE**

(57) A power supply system and a control method therefor, and an electronic device. The power supply system (100) comprises: a plurality of battery cells (110), the plurality of battery cells (110) being connected in series to each other; a first power supply circuit for generating a first power supply voltage of the power supply system (100) according to a series voltage of the plurality of battery cells (110); a second power supply circuit for generating a second power supply voltage of the power supply system (100) according to voltages of some of the plurality of battery cells (110); and switch circuits (120) for controlling on/off of the first power supply circuit and/or the second power supply circuit according to the first power supply voltage and the second power supply voltage, such that balanced discharge of the plurality of battery cells (110) is achieved, thereby facilitating reduction of the discharge loss of the power supply system, and prolonging the battery life of an electronic device.

FIG. 1

## Description

This application claims priority to China Patent Applicant No. 202211574426.9, filed on December 08, 2022 and entitled "POWER SUPPLY SYSTEM AND CONTROL METHOD THEREFOR, AND ELECTRONIC DEVICE", the entire contents of which are incorporated herein by reference.

## TECHNICAL FIELD

Embodiments of the present disclosure relate to the field of power supply control technologies, in particular, to a power supply system, a method for controlling a power supply system, and an electronic device.

## BACKGROUND

Currently, electronic devices, such as special-shaped mobile phones or phones with foldable screens, or the like, generally have a plurality of battery cells built-in. The plurality of battery cells are typically connected in series. An active balancing circuit may be configured to distribute charging current and discharging current according to capacity ratios of the plurality of battery cells with different capacities, thereby ensuring that the plurality of battery cells may be fully charged or fully discharged simultaneously.

During a discharge process of the plurality of battery cells, the active balancing circuit may maintain in operation, which causes a power transistor, a parasitic inductance resistor, and other devices of the active balancing circuit to generate losses, resulting in battery capacity losses that in turn reduce the battery life of the electronic devices.

## SUMMARY

Some embodiments of the present disclosure may provide a power supply system, a method for controlling a power supply system, and an electronic device. The following describes various aspects related to some embodiments of the present disclosure.

**In** a first aspect, some embodiments of the present disclosure may provide a power supply system. The power supply system may include a plurality of battery cells, connected with each other in series; a first power supply circuit, configured to generate a first supply voltage of the power supply system based on a series voltage of the plurality of battery cells; a second power supply circuit, configured to generate a second supply voltage of the power supply system based on a voltage of a subset of the plurality of battery cells; a switch circuit, configured to control the first power supply circuit and/or the second power supply circuit to be turned on or turned off based on the first supply voltage and the second supply voltage, enabling a balanced discharge of the plurality of battery cells.

In a second aspect, some embodiments of the present disclosure may further provide a method for controlling a power supply system. The power supply system may include a plurality of battery cells, connected with each other in series; a first power supply circuit, configured to generate a first supply voltage of the power supply system based on a series voltage of the plurality of battery cells; and a second power supply circuit, configured to generate a second supply voltage of the power supply system based on a voltage of a subset of the plurality of battery cells. The method may include controlling the first power supply circuit and/or the second power supply circuit to be turned on or turned off based on the first supply voltage and the second supply voltage, enabling a balanced discharge of the plurality of battery cells.

In a third aspect, some embodiments of the present disclosure may further provide an electronic device. The electronic device may include the power supply system mentioned in the first aspect.

In a fourth aspect, some embodiments of the present disclosure may further provide a computer-readable storage medium. The computer-readable storage medium may store executable code. When the executable code is executed, the method mentioned in the second aspect may be performed.

Some embodiments of the present disclosure may provide a power supply system. The power supply system may include a plurality of battery cells that are connected with each other in series to form a first power supply circuit. The first power supply circuit may be configured to provide a first power supply voltage to a load. A subset or a part of the plurality of battery cells may be connected with each other in series to form a second power supply circuit. The second power supply circuit may be configured to provide a second power supply voltage to the load. Then, the first power supply circuit and/or the second power supply circuit may be controlled, based on the first power supply voltage and the second power supply voltage, to supply power to the load, enabling a balanced discharge of the plurality of battery cells. Compared with a traditional solution that realizes the balanced discharge of the plurality of battery cells through the balancing circuit, the technical solution provided by some embodiments of the present disclosure may not require the balancing circuit for operation, thereby reducing the discharge losses of the power supply system and improving the battery life of the electronic device.

## BRIEF DESCRIPTION OF THE DRAWINGS

FIG. 1 is a structural schematic diagram of a power supply system in some embodiments of the present disclosure.
FIG. 2 is a structural schematic diagram of the power supply system shown in FIG. 1 that includes multiple second power supply circuits.

FIG. 3 is a structural schematic diagram of a power supply system in some other embodiments of the present disclosure.

FIG. 4 is a structural schematic diagram of a power supply system in still some other embodiments of the present disclosure.

FIG. 5 is a structural schematic diagram of a charging and discharging system in some embodiments of the present disclosure.

FIG. 6 is a structural schematic diagram of a boost-buck circuit in some embodiments of the present disclosure.

FIG. 7 is a structural schematic diagram of a boost-buck circuit in some other embodiments of the present disclosure.

FIG. 8 is a structural schematic diagram of a balancing circuit in some embodiments of the present disclosure.

FIG. 9 is a structural schematic diagram of a balancing circuit in some other embodiments of the present disclosure.

FIG. 10 is a flowchart of a method for controlling a power supply system in some embodiments of the present disclosure.

## DETAILED DESCRIPTION

The technical solutions in some embodiments of the present disclosure will be clearly and completely described below in conjunction with the accompanying drawings in some embodiments of the present disclosure. Obviously, the described embodiments are only some, rather than all, of the embodiments of the present disclosure.

It should be noted that the descriptions of the "first", "second", or etc., in some embodiments of the present disclosure are merely for descriptive purposes and should not be understood as indicating or implying their relative importance or implicitly specifying the number of indicated technical features. Thus, features defined as "first" and "second" may explicitly or implicitly include at least one such feature. Additionally, the technical solutions of various embodiments may be combined with each other, but only if they can be realized by those skilled in the art. If a combination of technical solutions results in contradictions or cannot be realized, it should be considered that such a combination does not exist and is not within the scope of protection claimed by the present disclosure.

Currently, an electronic device, such as a mobile phone and a tablet, etc., may generally adopt a battery with a plurality of battery cells to increase an overall battery capacity. However, sizes, capacities, and other parameters of the plurality of battery cells are usually required to be the same with each other, so as to ensure or enable a balanced charge and discharge of the plurality of battery cells. Thus, a shape of the battery is typically centrally symmetrical, which may limit a structural stacking of the electronic device, such as the mobile phone and the tablet, etc. In particular, an electronic device, such as a special-shaped mobile phone or a phone with a foldable screen, generally has a plurality of battery cells with different volumes built-in.

For the plurality of battery cells with different volumes, two main technical solutions may be provided, i.e., special-shaped batteries with an equal capacity being connected in series and special-shaped batteries with different capacities being connected in parallel. The technical solution of special-shaped batteries with an equal capacity being connected in series may require the plurality of battery cells to have similar and small volumes, which limits an overall capacity of the electronic device so that the structural space may not be fully utilized and thus reduces the battery life. The technical solution of special-shaped batteries with different capacities being connected in parallel may utilize an impedance matching or a current-limiting switch to ensure a balanced discharge of the plurality of battery cells. However, when a relatively large difference exists in the battery capacities, the balancing current may be relatively high, which may increase battery capacity losses and thus reduces the battery life.

When the plurality of battery cells with relatively large differences in capacities are adopted, the plurality of battery cells may be connected in series. Through adopting an active balancing circuit, charging current and discharging current may be distributed according to capacity ratios of the plurality of battery cells with different capacities, ensuring the plurality of battery cells to be fully charged or fully discharged simultaneously. In practical applications, during the discharge process of the device, the active balancing circuit may have to maintain in operation, which causes a power transistor, a parasitic inductance resistor, and other devices of the active balancing circuit to generate losses, resulting in battery capacity losses that in turn reduce the battery life of the electronic device.

To address the above problems, some embodiments of the present disclosure provide a power supply system. The power supply system may include a plurality of battery cells that are connected with each other in series to form a first power supply circuit, and the first power supply circuit may be configured to provide a first power supply voltage to a load. A subset or a part of the plurality of battery cells may be connected with each other in series to form a second power supply circuit, and the second power supply circuit may be configured to provide a second power supply voltage to the load. Then, the first power supply circuit and/or the second power supply circuit may be controlled, based on the first power supply voltage and the second power supply voltage, to supply power to the load, enabling a balanced discharge of the plurality of battery cells. Compared with a traditional solution that realizes the balanced discharge of the plurality of battery cells through the balancing circuit, the technical solution provided by some embodiments of the present disclosure may not require the balancing circuit for operation, thereby reducing the discharge losses of the power supply system and improving the battery life of the electronic device.

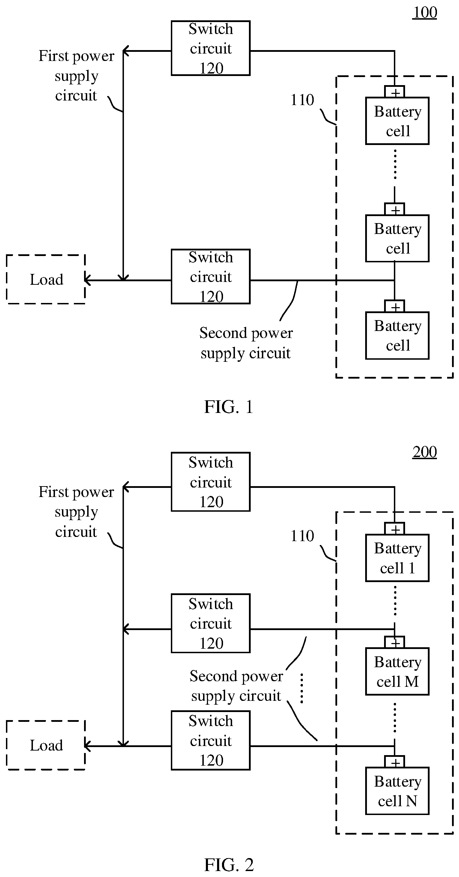

FIG. 1 is a structural schematic diagram of a power supply system in some embodiments of the present disclosure. As shown in FIG. 1, the power supply system 100 may include a plurality of battery cells 110, a switch circuit 120, a first power supply circuit, and a second power supply circuit.

The plurality of battery cells 110 may be connected with each other in series. It should be understood that electric capacities of the plurality of battery cells 110 may all be different, or at least two of the plurality of battery cells 110 may have different electric capacities. For an electronic device, such as a special-shaped mobile phone or a phone with a foldable screen, varying the electric capacities of the plurality of battery cells 110 may fully utilize the structural space of the electronic device, thereby increasing the overall battery capacity and improving the battery life of the electronic device.

A first power supply circuit may include the plurality of battery cells 110 connected in series. The first power supply circuit may be configured to generate a first power supply voltage of the power supply system 100 based on a series voltage of the plurality of battery cells 110 and to provide the first power supply voltage to the load through the first power supply circuit.

A second power supply circuit may include a subset or a part of the plurality of battery cells 110. The second power supply circuit may be configured to generate a second power supply voltage of the power supply system 100 based on a series voltage of the subset of the plurality of battery cells 110 and to provide the second power supply voltage to the load through the second power supply circuit. It should be understood that the subset of the plurality of battery cells 110 may include one or more battery cells.

The switch circuit 120 may be connected to the first power supply circuit in a switchable manner, and connected to the second power supply circuit in a switchable manner, respectively; i.e., the switch circuit 120 may be connected to or disconnected from the first power supply circuit or the second power supply circuit, respectively. The switch circuit 120 may be configured to control the first power supply circuit and/or the second power supply circuit to be turned on or turned off based on the first power supply voltage and the second power supply voltage, enabling a balanced discharge of the plurality of battery cells 110.

As mentioned above, in some embodiments of the present disclosure, the balancing circuit may not be required for operation. Through the control of switching between different power supply circuits, the plurality of battery cells on different circuits may discharge independently, ensuring the balanced discharge of the plurality of battery cells 110, which reduces discharge losses and improves the battery life of the electronic device.

As shown in FIG. 2, in some embodiments, the plurality of battery cells 110 may include battery cells with different electric capacities. The plurality of battery cells 110 may be connected in series in order of electric capacity sizes. A positive electrode of one of the plurality of battery cells 110 that has the smallest electric capacity may be connected to the load, forming the first power supply circuit. The second power supply circuit in a power supply system 200 may include multiple power supply circuits. The multiple power supply circuits may be configured to generate multiple different second power supply voltages of the power supply system 200 based on voltages of different subsets of the plurality of battery cells 110 correspondingly. In other words, for each additional battery cell with a different capacity added in the plurality of battery cells 110, an additional second power supply circuit may be added.

For example, suppose that the plurality of battery cells 110 includes N battery cells, the N battery cells may be connected in order of electric capacity sizes, where the battery cell 1 has the smallest electric capacity and the battery cell N has the largest electric capacity. In a case where an electric capacity of each of the battery cells M to N (a total of N-M+1 battery cells) is different from an electric capacity of the battery cell 1, (N-M+1) second power supply circuits may be configured. It should be understood that each second power supply circuit may include a different number of battery cells. For example, a second power supply circuit drawn from a positive electrode of the battery cell N may include only the battery cell N, and in this case, the second power supply voltage of the second power supply circuit may be a supply voltage of the battery cell N. For another example, a second power supply circuit drawn from a positive electrode of the battery cell M may include only the battery cells M to N (a total of N-M+1 different battery cells), and in this case, the second power supply voltage of the second power supply circuit may be a supply voltage generated based on a series voltage of the (N-M+1) different battery cells. In a case where electric capacities of the battery cells 1 to M-1 are the same, electric capacities of the battery cells M to N are the same, but the electric capacity of the battery cell 1 and the electric capacity of the battery cell M are different, then only one second power supply circuit needs to be drawn from the battery cell M.

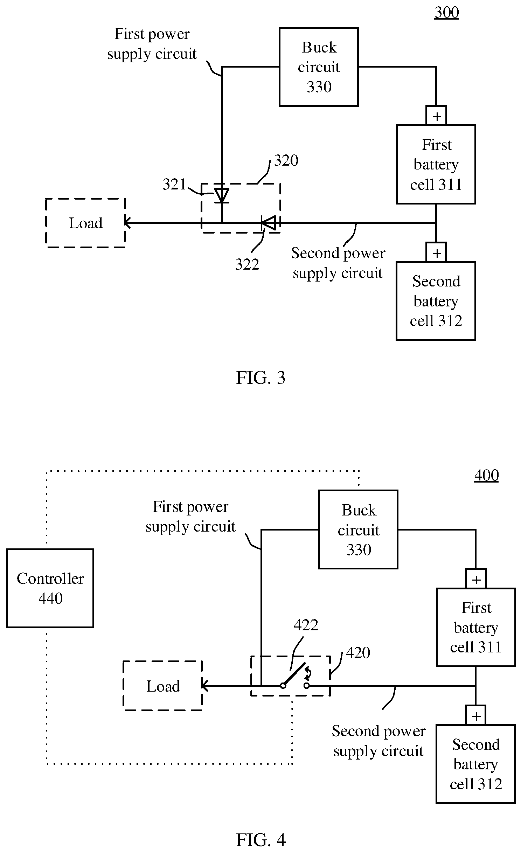

In some embodiments, the first power supply circuit and the second power supply circuit may include a buck circuit or step-down circuit (not shown in the figure) to perform a step-down processing on the voltage of the power supply circuit, which will be illustrated later in conjunction with FIG. 3.

The switch circuit 120 may be connected to the first power supply circuit in a switchable manner, and the switch circuit 120 may be connected to the multiple second power supply circuits in a switchable manner, respectively; i.e., the switch circuit 120 may be connected to or disconnected from the first power supply circuit or the multiple second power supply circuits, respectively. The switch circuit 120 may be configured to control the first power supply circuit and/or the multiple second power supply circuits to be turned on or turned off based on the first supply voltage and the multiple second supply voltages, enabling the balanced discharge of the plurality of battery cells 110.

For ease of description, the following explanation takes two battery cells with different capacities connected in series as an example. Some embodiments of the present disclosure may provide a structural schematic diagram of another power supply system. As shown in FIG. 3, a power supply system 300 may include a first battery cell 311 and a second battery cell 312 that are connected with each other in series. In this case, the first power supply circuit may generate the first power supply voltage based on a series voltage of the first battery cell 311 and the second battery cell 312. The second power supply circuit may generate the second power supply voltage based on a voltage of the second battery cell 312. An electric capacity of the first battery cell 311 may be smaller than an electric capacity of the second battery cell 312. It should be understood that the first battery cell 311 and/or the second battery cell 312 may include multiple battery cells connected in series/parallel, as long as a fully charged voltage of the first battery cell 311 and a fully charged voltage of the second battery cell 312 are ensured to be the same.

In some embodiments, the first power supply circuit may further include a buck circuit 330. The buck circuit 330 may be connected within the first power supply circuit and may be configured to perform a step-down processing on a series voltage of multiple battery cells to generate the first power supply voltage. Taking the multiple battery cells including the first battery cell 311 and the second battery cell 312 as an example, the buck circuit 330 may be configured to perform the step-down processing on the series voltage of the first battery cell 311 and the second battery cell 312 to generate the first power supply voltage. For example, the first power supply voltage $V_1$ obtained through the step-down processing may satisfy the following condition:

$$V_1 = \frac{1}{2} \left( V_{bat1} + V_{bat2} \right)$$

where $V_{bat1}$ is the power supply voltage of the first battery cell 311 and $V_{bat2}$ is the power supply voltage of the second battery cell 312.

It should be understood that the second power supply voltage $V_2$ may be equal to the power supply voltage $V_{bat2}$ of the second battery cell 312, that is:

$$V_2 = V_{bat2}$$

In some embodiments, a switch circuit 320 may be configured to: control or enable the first power supply circuit to be in an on state and the second power supply circuit to be in an off state, in a case where a difference between the first supply voltage and the second supply voltage is greater than zero or greater than a preset threshold; and control or enable the second power supply circuit to be in an on state and the first power supply circuit to be in an off state, in a case where a difference between the first supply voltage and the second supply voltage is less than zero or less than the preset threshold. In this way, the balanced discharge of the first battery cell 311 and the second battery cell 312 may be ensured. The preset threshold may be set based on a load condition of a downstream system or based on empirical values, which are not limited herein.

As further shown in FIG. 3, in some embodiments, the switch circuit 320 may include a first diode 321 and a second diode 322. The first diode 321 may be disposed on or configured in the first power supply circuit. The second diode 322 may be disposed on or configured in the second power supply circuit. In a case where the first power supply voltage is greater than the second power supply voltage, the first diode 321 may conduct and the second diode 322 may be cutoff, which enables the first battery cell 311 and the second battery cell 312 to discharge in series. In a case where the first power supply voltage is less than the second power supply voltage, the second diode 322 may conduct and the first diode 321 may be cutoff, which enables only the second battery cell 312 with higher capacity to discharge, thereby ensuring the first battery cell 311 and the second battery cell 312 that have different capacities to have a same remaining capacity, and thus achieving the balanced discharge during the discharge process. It can be understood that in the above control process, a conduction of each of the first diode 321 and the second diode 322 may be passively selected through designing a PN-junction voltage (i.e., a voltage across the PN junction) of the diodes. Furthermore, the first power supply circuit and/or the multiple second power supply circuits may be controlled to be turned on or turned off, so as to enable the balanced discharge of the plurality of battery cells 110 without requiring a controller to control the switch circuit 320, thereby reducing controller costs.

As shown in FIG. 4, in some embodiments, a power supply system 400 may further include a controller 440. The controller 440 may be connected to a switch circuit 420 and configured to control the switch circuit 420 based on a control command of the controller, which further controls the first power supply circuit and/or the second power supply circuit to be turned on or turned off, thereby enabling the balanced discharge of the first battery cell 311 and the second battery cell 312.

It should be noted that the controller 440 may be a central processing unit (CPU), a microcontroller unit (MCU), an application processor (AP), an application-specific integrated circuit (ASIC), a field-programmable gate array (FPGA), or other programmable logic devices, transistor logic devices, hardware components, or any combination thereof.

In some embodiments, since the buck circuit 330 may include a switch device that may be configured to control the first power supply circuit to be turned on or turned off, a separate load switch may not have to be configured in the first power supply circuit, thereby reducing costs. In other words, the switch circuit 420 may only include the load switch 422 that is disposed on or configured in the second power supply circuit and configured to control the second power supply circuit to be turned on or turned off. It should be noted that the load switch 422 may include a Metal-Oxide-Semiconductor (MOS) transistor, a thyristor, a triode, an insulated-gate bipolar transistors (IGBT), a relay, etc. In some embodiments, the load switch 422 may be further implemented as other mechanical or physical structures or devices with controllable switching functions, or reaction vessels based on chemical principles.

As further shown in FIG. 4, in some embodiments, a voltage difference threshold $V_{th}$ may be set based on actual operating conditions. When $V_1-V_2>V_{th}$, the controller 440 may control the load switch 422 to be turned off and enable the buck circuit 330, which enables a first voltage to be supplied to the load through the first power supply circuit. That is, the first battery cell 311 and the second battery cell 312 may discharge in series. When $V_1-V_2 <V_{th}$, the controller 440 may control the load switch 422 to be turned on and disable the buck circuit 330, which enables a second voltage to be supplied to the load through the second power supply circuit. That is, only the second battery cell 312 with higher capacity may discharge. The above balanced discharge method may enable the plurality of battery cells with different capacities to maintain approximately the same voltage, thereby ensuring the plurality of battery cells to fully discharge simultaneously. Furthermore, since no active balancing circuit is adopted for charge transfer in this case, the discharge losses may be reduced, thereby extending the battery life of the power supply system.

It should be noted that to ensure a continuous voltage output from the power supply system, a relatively short overlap period may be required when switching between the first power supply circuit and the second power supply circuit. In this case, both the first power supply circuit and the second power supply circuit may be turned on to supply power to the load.

As further shown in FIG. 4, in some embodiments, the buck circuit 330 may be enabled under any circumstance, meaning that the first power supply circuit remains connected. An absolute value of the voltage difference between the first power supply voltage and the second power supply voltage may then be taken as a criterion for decision-making. When $|V_1-V_2|>V_{th}$, the controller 440 may control the load switch 422 to be turned off, enabling the first battery cell 311 and the second battery cell 312 to discharge in series; and when $|V_1-V_2|<V_{th}$, the controller 440 may control the load switch 422 to be turned on and keep the buck circuit 330 enabled, thereby enabling a voltage supplied to the load through both the first power supply circuit and the second power supply circuit. It should be understood that, in this case, a source for the voltage supplied to the load may be determined based on values of the first power supply voltage and the second power supply voltage. When $V_1>V_2$, the voltage may be supplied to the load through the first power supply circuit and, in this case, a load system voltage is equal to $V_1$, i.e., $V_{sys}=V_1$. Since a path impedance exists between $V_{sys}$ and $V_2$ and $V_{sys}>V_2$, a current from the first power supply circuit may flow in reverse into the second power supply circuit to charge the second battery cell 312. Similarly, when $V_1<V_2$, a current from the second power supply circuit may flow in reverse to charge the first battery cell 311, thereby achieving voltage balancing between the first battery cell 311 and the second battery cell 312. When $V_1=V_2$, the first power supply circuit and the second power supply circuit may both supply power to the load. In other words, when the load switch 422 is turned on and the buck circuit 330 is enabled simultaneously, a power supply path for the load may be automatically determined based on the values of both $V_1$ and $V_2$, thereby achieving voltage balancing between the first battery cell 311 and the second battery cell 312 while reducing control costs.

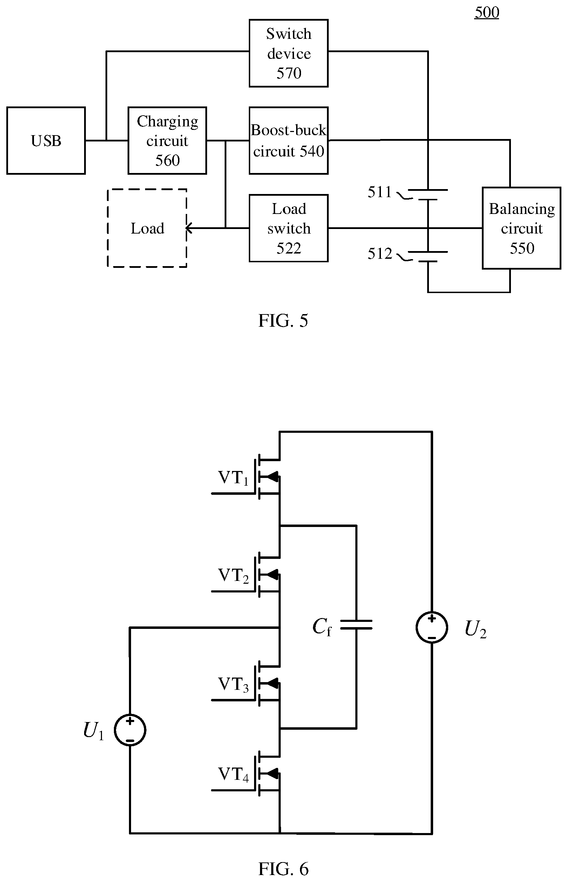

Some embodiments of the present disclosure may provide a charging and discharging system 500. The charging and discharging system 500 may be configured to control the charging and discharging of both a first battery cell 511 and a second battery cell 512. As shown in FIG. 5, during a charging phase, when a direct charging adapter is connected to a USB for charging, a direct charging switch device 570 (which may be a MOS transistor) may be turned on and directly charge the first battery cell 511 and the second battery cell 512. When a standard external adapter is connected to the USB for charging, a charging voltage may be supplied through a conventional charging circuit 560 (which may be a buck-boost charging circuit), and then a non-inverting or positive-output boost-buck circuit 540 may step up the charging voltage at a ratio of 1:2 to charge the first battery cell 511 and the second battery cell 512. During a charge phase, an active balancing circuit 550 may operate to transfer a part of the charging current from the first battery cell 511 with lower capacity to the second battery cell 512 with higher capacity, ensuring that the charging currents of the first battery cell 511 and the second battery cell 512 are positively proportional to the capacities of the first battery cell 511 and the second battery cell 512 respectively, thereby ensuring the first battery cell 511 and the second battery cell 512 to reach full charge simultaneously. During a discharge phase, the balancing circuit 550 may not need to operate, and the boost-buck circuit 540 and/or the load switch 522 may be enabled based on the first power supply voltage $V_1$ and the second power supply voltage $V_2$, thereby controlling the first power supply circuit and/or the second power supply circuit to be turned on or turned off to enable the balanced discharge of the first battery cell 511 and the second battery cell 512. The discharge control circuit may be referred to the above and will not be described in detail herein.

It should be noted that the technical solution of battery cell balancing discharge described in FIG. 4 and the technical solution of battery cell balancing discharge described in FIG. 5 may be used in combination. For example, both the control solutions may be applied through a time-division multiplexing or other strategies.

In some embodiments, the boost-buck circuit 540 may be a DC-DC converter, which is configured to boost at a ratio of 1:2 during a forward charging and buck at a ratio of 2:1 during a reverse discharging. The boost-buck circuit 540 may adopt a non-isolated circuit with a charge pump (CP) and an isolated circuit with LC resonance.

As shown in FIG. 6, the CP charge pump may be configured to control switching transistors $VT_1$ to $VT_4$ to be turned on or turned off, so as to realize the charging and the discharging of a capacitor $C_f$, thereby utilizing an energy storage characteristic of the capacitor $C_f$ to achieve a forward boosting at U1:U2=1:2 or a reverse bucking at U2:U1=2:1.

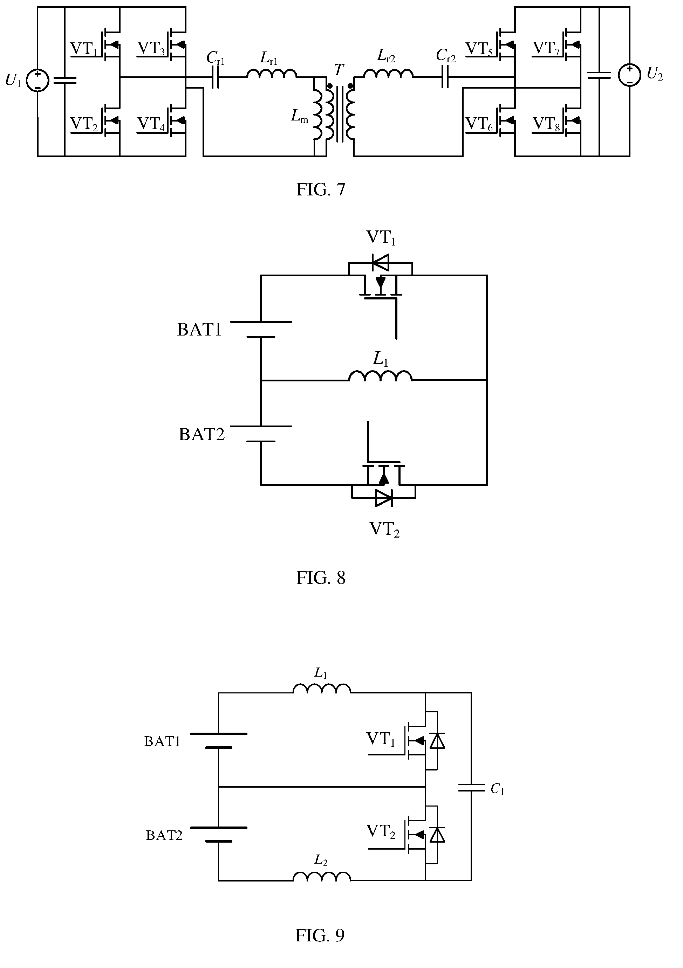

As shown in FIG. 7, a bidirectional DC-DC conversion may be realized through a controllable full-bridge circuit. During the forward charging, the switching transistors $VT_1$ to $VT_4$ may be configured to operate in an inverter state, which inverts an input DC voltage U1 into an AC square wave. Through a capacitor $C_{r1}$, an inductor $L_{r1}$, and an inductor $L_m$, the AC square wave may excite a primary LLC resonant cavity to resonate. After that, the AC square wave may be transferred to a secondary circuit through a transformer T, and excite a secondary LC resonant cavity through an inductor $L_{r2}$ and a capacitor $C_{r2}$. Finally, the AC square wave may be rectified and filtered by switching transistors VT5 to VT8, converting to an output voltage U2 which may be output to the next stage. The reverse discharging process has a similar principle, with the difference being that the switching transistors $VT_1$ to $VT_4$ operate in the rectifier state and the switching transistors $VT_5$ to $VT_8$ operate in the inverter state.

In some embodiments, the balancing circuit 550 may adopt a synchronous rectification DC chopper circuit, such as a BUCK-BOOST circuit or a Cuk circuit, etc.

A possible BUCK-BOOST circuit may be shown in FIG. 8. When the $VT_1$ conducts and the $VT_2$ is cutoff, an inductor $L_1$ starts being charged and a battery cell BAT1 discharges. When the $VT_1$ is cutoff and the $VT_2$ conducts, the inductor $L_1$ starts discharging and a BAT2 is charged. Through a complementary symmetrical switching of the $VT_1$ and the $VT_2$, charging and discharging between the battery cells BAT1 and BAT2 may be realized, enabling the energy transfer of the battery cells.

A possible Cuk circuit may be shown in FIG. 9. When the $VT_1$ conducts and the $VT_2$ is cutoff, an inductor $L_1$ is charged, an inductor $L_2$ discharges, a battery cell BAT1 discharges, and a battery cell BAT2 is charged. When the $VT_1$ is cutoff and the $VT_2$ conducts, the inductor L1 discharges, the inductor L2 is charged, the battery cell BAT1 is charged, and the battery cell BAT2 discharges. Through the complementary symmetrical switching of the $VT_1$ and the $VT_2$, charging and discharging between the battery cells BAT1 and BAT2 may be realized, enabling the energy transfer of the battery cells.

Some embodiments of the present disclosure may further provide an electronic device. The electronic device may include the aforementioned power supply system. The electronic device may be a mobile phone, a tablet, or the like, which will not be limited herein.

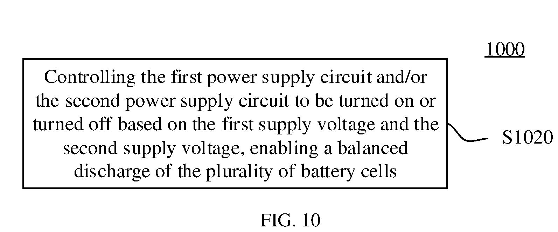

Some embodiments of the power supply system provided by the present disclosure are described in detail above with reference to FIGS. 1-9. In the following, some embodiments of a method for controlling the power supply system provided by the present disclosure are described in detail with reference to FIG. 10. It should be understood that the description of the method embodiments corresponds to the description of the power supply system embodiments. Therefore, parts that are not described in detail may be referred to in the previous method embodiments.

FIG. 10 is a flowchart of a method for controlling a power supply system in some embodiments of the present disclosure. The power supply system may include a plurality of battery cells connected with each other in series, a first power supply circuit configured to generate a first power supply voltage of the power supply system based on a series voltage of the plurality of battery cells, and a second power supply circuit configured to generate a second power supply voltage of the power supply system based on a voltage of a subset of the plurality of battery cells. The method 1000 may include an operation S1020.

At the operation S1020, the first power supply circuit and/or the second power supply circuit may be controlled to be turned on or turned off based on the first supply voltage and the second supply voltage, enabling a balanced discharge of the plurality of battery cells.

In some embodiments, electric capacities of the plurality of battery cells may be different from each other, or at least two of the plurality of battery cells may have different electric capacities.

In some embodiments, the plurality of battery cells may include a first battery cell and a second battery cell connected with each other in series. The first power supply circuit may be configured to generate the first supply voltage based on a series voltage of the first battery cell and the second battery cell. The second power supply circuit may be configured to generate the second supply voltage based on a voltage of the second battery cell. An electric capacity of the first battery cell may be smaller than an electric capacity of the second battery cell.

In some embodiments, the first power supply circuit may further include a buck circuit. The buck circuit may be connected within or configured in the first power supply circuit and configured to perform a step-down processing on the series voltage of the plurality of battery cells to generate the first power supply voltage.

In some embodiments, the controlling the first power supply circuit and/or the second power supply circuit to be turned on or turned off based on the first supply voltage and the second supply voltage may include the following operations. In a case where a difference between the first power supply voltage and the second power supply voltage is greater than zero or greater than a preset threshold, the first power supply circuit may be controlled to be in an on state and the second power supply circuit may be controlled to be in an off state. In a case where the difference between the first power supply voltage and the second power supply voltage is less than zero or less than the preset threshold, the second power supply circuit may be controlled to be in the on state and the first power supply circuit may be controlled to be in the off state.

In some embodiments, the power supply system may further include a first diode and a second diode. The first diode may be disposed on or configured in the first power supply circuit. The second diode may be disposed on or configured in the second power supply circuit. The controlling the first power supply circuit and/or the second power supply circuit to be turned on or turned off based on the first supply voltage and the second supply voltage may include the following operations. In a case where the first power supply voltage is greater than the second power supply voltage, the first diode may be controlled to conduct and the second diode may be controlled to be cutoff. In a case where the first power supply voltage is less than the second power supply voltage, the second diode may be controlled to conduct and the first diode may be controlled to be cutoff.

Some embodiments of the present disclosure may further provide a computer-readable storage medium. The computer-readable storage medium may be configured to store a program. The program, when executed by a computer, may cause the computer to perform the methods provided by various embodiments of the present disclosure.

Some embodiments of the present disclosure may further provide a computer program product. The computer program product may include a program. The program, when executed by a computer, may cause the computer to perform the methods provided by various embodiments of the present disclosure.

The above embodiments may be fully or partially implemented through software, hardware, firmware, or any other combination thereof. When implemented using software, the above embodiments may be fully or partially realized in the form of a computer program product. The computer program product may include one or more computer instructions. The computer program instructions, when loaded and executed on a computer, may cause the computer to perform all or part of the processes or functions as described in the embodiments of the present disclosure. The computer may be a general-purpose computer, a special-purpose computer, a computer network, or other programmable devices. The computer instructions may be stored on a machine-readable storage medium or transferred from one machine-readable storage medium to another, for example, the computer instructions may be transferred from a website, computer, server, or data center through wired (e.g., coaxial cable, fiber optics, Digital Subscriber Line (DSL)) or wireless (e.g., infrared, wireless, microwave, etc.) means to another website, computer, server, or data center. The machine-readable storage medium may be any available medium that is able to be accessed by a computer or a data storage device, such as a server or data center, which includes one or more available media integrated. The available media may be magnetic media (e.g., floppy disks, hard drives, magnetic tapes), optical media (e.g., Digital Video Disc (DVD)), or semiconductor media (e.g., Solid State Disk (SSD)), etc.

Any ordinary skilled in the art may recognize that the units and algorithm operations described in the various embodiments of the present disclosure may be implemented using electronic hardware, or a combination of computer software and electronic hardware. Whether these functions are implemented in hardware or software depends on the specific application and design constraints of the technical solution. A skilled technician may use different methods to implement the described functions for each specific application, but such implementation should not be considered beyond the scope of the present disclosure.

In the various embodiments provided by the present disclosure, it should be understood that the disclosed systems, devices, and methods may be implemented in other ways. For example, the device embodiments described above are merely illustrative, and the division of units is just one logical division. In actual implementation, there may be other ways to divide them. For example, multiple units or components may be combined or integrated into another system, or some features may be omitted or not executed. Additionally, the coupling or direct communication connection between the units shown or discussed can be through some interfaces, indirect coupling, or communication connections between devices or units, which could be electrical, mechanical, or in other forms.

The units described as separate components may or may not be physically separate. The components displayed as units may or may not be physical units; that is, they may be located in one place or may be distributed across multiple network units. Depending on the actual needs, some or all of the units may be selected to achieve the objectives of the embodiments of the present disclosure.

In addition, in the various embodiments of the present disclosure, each functional unit may be integrated into one processing unit or may exist as separate physical units. Two or more units may further be integrated into one unit.

The above describes some specific embodiments of the present disclosure, but the scope of the present disclosure is not limited to these. Any changes or replacements that those skilled in the art can easily think of within the technical scope disclosed in the present disclosure should be covered by the scope of the present disclosure. Therefore, the scope of the present disclosure should be determined by the scope of the claims.

## Claims

1. A power supply system, comprising:

   a plurality of battery cells, connected with each other in series;
   a first power supply circuit, configured to generate a first supply voltage of the power supply system based on a series voltage of the plurality of battery cells;
   a second power supply circuit, configured to generate a second supply voltage of the power supply system based on a voltage of a subset of the plurality of battery cells; and
   a switch circuit, configured to control the first power supply circuit and/or the second power supply circuit to be turned on or turned off based on the first supply voltage and the second supply voltage, enabling a balanced discharge of the plurality of battery cells.

2. The power supply system as claimed in claim 1, wherein electric capacities of the plurality of battery cells are different from each other, or at least two of the plurality of battery cells have different electric capacities.

3. The power supply system as claimed in claim 2, wherein the plurality of battery cells comprise a first battery cell and a second battery cell connected with each other in series;

   the first power supply circuit is configured to generate the first supply voltage based on a series voltage of the first battery cell and the second battery cell;
   the second power supply circuit is configured to generate the second supply voltage based on a voltage of the second battery cell; and
   wherein an electric capacity of the first battery cell is smaller than an electric capacity of the second battery cell.

4. The power supply system as claimed in claim 1, wherein the first power supply circuit comprises:

   a buck circuit, connected to the plurality of battery cells that are connected with each other in series and configured to perform a step-down processing on the series voltage of the plurality of battery cells to generate the first supply voltage.

5. The power supply system as claimed in claim 1, wherein the switch circuit is configured to:

   control the first power supply circuit to be in an on state and the second power supply circuit to be in an off state, in a case where a difference between the first supply voltage and the second supply voltage is greater than zero or greater than a preset threshold; and
   control the second power supply circuit to be in an on state and the first power supply circuit to be in an off state, in a case where a difference between the first supply voltage and the second supply voltage is less than zero or less than the preset threshold.

6. The power supply system as claimed in claim 1, wherein the switch circuit comprises a first diode and a second diode, the first diode is configured in the first power supply circuit, and the second diode is configured in the second power supply circuit;

   wherein in a case where the first supply voltage is greater than the second supply voltage, the first diode conducts and the second diode is cutoff; and
   in a case where the first supply voltage is less than the second supply voltage, the second diode conducts and the first diode is cutoff.

7. The power supply system as claimed in claim 1, wherein the switch circuit is connected to a controller and is configured to control the first power supply circuit and/or the second power supply circuit to be turned on or turned off based on a control command of the controller.

8. The power supply system as claimed in claim 1, wherein the second power supply circuit is configured to generate a plurality of different second supply voltages of the power supply system based on voltages of different subsets of the plurality of battery cells correspondingly.

9. A method for controlling a power supply system, the power supply system comprising:

   a plurality of battery cells, connected with each other in series;
   a first power supply circuit, configured to generate a first supply voltage of the power supply system based on a series voltage of the plurality of battery cells; and
a second power supply circuit, configured to generate a second supply voltage of the power supply system based on a voltage of a subset of the plurality of battery cells;
the method comprising:
controlling the first power supply circuit and/or the second power supply circuit to be turned on or turned off based on the first supply voltage and the second supply voltage, enabling a balanced discharge of the plurality of battery cells.

10. The method as claimed in claim 1, wherein electric capacities of the plurality of battery cells are different from each other, or at least two of the plurality of battery cells have different electric capacities.

11. The method as claimed in claim 10, wherein the plurality of battery cells comprise a first battery cell and a second battery cell connected with each other in series;

the first power supply circuit is configured to generate the first supply voltage based on a series voltage of the first battery cell and the second battery cell;
the second power supply circuit is configured to generate the second supply voltage based on a voltage of the second battery cell; and
wherein an electric capacity of the first battery cell is smaller than an electric capacity of the second battery cell.

12. The method as claimed in claim 9, wherein the first power supply circuit comprises:
a buck circuit, connected to the plurality of battery cells that are connected with each other in series and configured to perform a step-down processing on the series voltage of the plurality of battery cells to generate the first supply voltage.

13. The method as claimed in claim 9, wherein the controlling the first power supply circuit and/or the second power supply circuit to be turned on or turned off based on the first supply voltage and the second supply voltage, comprises:

controlling the first power supply circuit to be in an on state and the second power supply circuit to be in an off state, in a case where a difference between the first supply voltage and the second supply voltage is greater than zero or greater than a preset threshold; and
controlling the second power supply circuit to be in an on state and the first power supply circuit to be in an off state, in a case where a difference between the first supply voltage and the second supply voltage is less than zero or less than the preset threshold.

14. The method as claimed in claim 9, wherein the power supply system further comprises a first diode and a second diode, the first diode is disposed on the first power supply circuit, and the second diode is disposed on the second power supply circuit;
wherein the controlling the first power supply circuit and/or the second power supply circuit to be turned on or turned off based on the first supply voltage and the second supply voltage, comprises:

controlling the first diode to conduct and the second diode to be cutoff, in a case where the first supply voltage is greater than the second supply voltage; and
controlling the second diode to conduct and the first diode to be cutoff, in a case where the first supply voltage is less than the second supply voltage.

15. An electronic device, comprising the power supply system as claimed in any one of claims 1-8.

<u>100</u>

Switch
circuit
120

First power
supply
circuit

110

Battery
cell

Battery
cell

Load

Switch
circuit
120

Second power
supply circuit

Battery
cell

FIG. 1

<u>200</u>

Switch
circuit
120

First power
supply
circuit

110

Battery
cell 1

Switch
circuit
120

Second power
supply circuit

Battery
cell M

Load

Switch
circuit
120

Battery
cell N

FIG. 2

<u>300</u>

First power
supply circuit

Buck
circuit
330

+

First
battery
cell 311

320

321

Load

322

Second power
supply circuit

+

Second
battery
cell 312

FIG. 3

<u>400</u>

First power
supply circuit

Buck
circuit
330

+

First
battery
cell 311

Controller
440

422

420

Load

Second power
supply circuit

+

Second
battery
cell 312

FIG. 4

_500_

FIG. 5

FIG. 6

FIG. 7

FIG. 8

FIG. 9

<u>1000</u>

Controlling the first power supply circuit and/or the second power supply circuit to be turned on or turned off based on the first supply voltage and the second supply voltage, enabling a balanced discharge of the plurality of battery cells

S1020

FIG. 10

## INTERNATIONAL SEARCH REPORT

| International application No. |
| --- |
| **PCT/CN2023/115894** |

**A.    CLASSIFICATION OF SUBJECT MATTER**

H02J7/00(2006.01)i

According to International Patent Classification (IPC) or to both national classification and IPC

**B.    FIELDS SEARCHED**

Minimum documentation searched (classification system followed by classification symbols)

IPC:H02J

Documentation searched other than minimum documentation to the extent that such documents are included in the fields searched

Electronic data base consulted during the international search (name of data base and, where practicable, search terms used)

CNTXT; ENTXT; ENTXTC; DWPI; CNKI: 部分, 电芯, 放电, 串联, 多电芯, 供电电路, 均衡, part, cell, battery, discharge, series, multi cell, power supply circuit, balance

**C.    DOCUMENTS CONSIDERED TO BE RELEVANT**

| Category* | Citation of document, with indication, where appropriate, of the relevant passages | Relevant to claim No. |
| --- | --- | --- |
| X | CN 113708466 A (HALO MICROELECTRONICS CO., LTD.) 26 November 2021 (2021-11-26) description, paragraphs 32-104, and figures 1-10 | 1-15 |
| A | CN 113228460 A (GUANGDONG OPPO MOBILE COMMUNICATIONS CO., LTD.) 06 August 2021 (2021-08-06) entire document | 1-15 |
| A | CN 114123385 A (HONOR TERMINAL CO., LTD.) 01 March 2022 (2022-03-01) entire document | 1-15 |
| A | US 2015229140 A1 (SAMSUNG SDI CO., LTD.) 13 August 2015 (2015-08-13) entire document | 1-15 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 November 2023** | **17 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/115894**

| Patent document cited in search report | | | Publication date (day/month/year) | Patent family member(s) | | | Publication date (day/month/year) |
|---|---|---|---|---|---|---|---|
| CN | 113708466 | A | 26 November 2021 | CN | 113708466 | B | 11 March 2022 |
| | | | | US | 11424629 | B1 | 23 August 2022 |
| CN | 113228460 | A | 06 August 2021 | WO | 2020191540 | A1 | 01 October 2020 |
| | | | | EP | 3934053 | A1 | 05 January 2022 |
| | | | | US | 2022006381 | A1 | 06 January 2022 |
| | | | | EP | 3934053 | A4 | 16 March 2022 |
| CN | 114123385 | A | 01 March 2022 | None | | | |
| US | 2015229140 | A1 | 13 August 2015 | KR | 20150093415 | A | 18 August 2015 |

Form PCT/ISA/210 (patent family annex) (July 2022)

**REFERENCES CITED IN THE DESCRIPTION**

**Patent documents cited in the description**

- CN 202211574426